# EUROPÄISCHE PATENTSCHRIFT

(11) **EP 3 225 114 B1**
(45) Veröffentlichungstag und Bekanntmachung des Hinweises auf die Patenterteilung: **11.09.2019**
(21) Anmeldenummer: 16163027.2
(22) Anmeldetag: 30.03.2016
(51) Int. Cl.: A23C 1/00, A23C 9/148, A23C 9/15, A23C 9/152, A23J 1/20, A23L 33/00, A23C 21/00, A23C 9/142, A23C 9/144, A23C 9/146

(54) **VERFAHREN ZUR HERSTELLUNG DEMINERALISIERTE MOLKEPULVER**
METHOD FOR PRODUCING DEMINERALIZED WHEY POWDERS
PROCÉDÉ DE PRODUCTION DE POUDRES DU PETIT-LAIT DEMINERALISES

(43) Veröffentlichungstag der Anmeldung: 04.10.2017
(73) Patentinhaber: DMK Deutsches Milchkontor GmbH, 27404 Zeven (DE)
(72) Erfinder: Döring, Sven-Rainer, 27404 Zeven (DE); Oehlckers, Thorben, 21244 Buchholz (DE); Wiegers, Thorben, 27404 Zeven (DE)
(74) Vertreter: Fabry, Bernd

(56) Entgegenhaltungen:
- EP-B1- 2 730 170
- CN-A- 102 898 516
- US-A- 6 033 700
- US-A1- 2009 142 459

## Beschreibung

### GEBIET DER ERFINDUNG

Die Erfindung befindet sich auf dem Gebiet der Milchprodukte und betrifft ein Verfahren zur Herstellung eines demineralisierten Molkepulvers.

### STAND DER TECHNIK

Die erste Fertignahrung für Babys entwickelte *Justus von Liebig* bereits im Jahr 1865, zunächst in flüssiger Form als "Suppe für Säuglinge". Einige Zeit später brachte er eine Fertignahrung in Pulverform auf den Markt, die allgemein als *Kindermehl* bezeichnet wurde. Beide Produkte wurden ab 1866 in mehreren europäischen Ländern verkauft, wobei Liebigs Renommee zum Verkaufserfolg beitrug. Liebigs Produkte wurden zunächst in Apotheken verkauft und wegen der komplizierten Zubereitung teilweise dort auch schon fertig hergestellt. In München boten zwei Apotheker frisch zubereitete Liebig-Suppe in Einzelportionen an. 1866/67 verkaufte alleine eine davon innerhalb von elf Monaten 30.000 Portionen. Der gelernte Apothekergehilfe *Henri Nestlé* fügte Liebigs Rezeptur kondensierte Milch hinzu und brachte das Pulver nach einem Versuche an zwei Säuglingen als *Henri Nestle's Kindermehl 1868* auf den Markt. Im Jahr 1874 wurden davon 670.000 Büchsen in 18 Ländern verkauft. Kindermehle galten als ungeeignet für die Ernährung der Kinder in den ersten Lebensmonaten. Die von Liebig und Nestle entwickelten Mischungen gelten als der Ursprung aller Säuglingsernährungsprodukte bis in die heutige Zeit.

1932 stieg die Firma MILUPA mit *Paulys Nährspeise*, die aus in Milch aufgelöstem Zwiebackmehl bestand, in die Produktion von Säuglingsnahrung ein. Der Münchner Kinderarzt *Günther Malyoth* entwickelte 1934 einen "Säuglingsnährzucker" unter dem Namen ALETE. In Deutschland war es üblich, Milch mit Haferflocken zu füttern. In den 1950er Jahren kamen so genannte *Schmelzflocken* auf den Markt. In der Nachkriegszeit wurde versucht, die Milchpräparate immer stärker an die Zusammensetzung von Muttermilch anzugleichen und als "humanisiert" oder "adaptiert" zu verkaufen. Mitte der 1950er Jahre kamen die ersten Gemüsebreie für Babys als Konserven auf den Markt, seit 1959 abgefüllt in Gläschen. 1959 gab es fertigen Grießbrei von MILUPA, 1964 entwickelte das Unternehmen die erste synthetische Milch namens *MILUMIL.*

Bei der Entwicklung moderner Babynahrung weiß man heute, dass der tägliche Energiebedarf von Säuglingen auf Grund des Wachstums mit etwa 377 kJ (= 90 kcal) pro Kilogramm Körpergewicht zwei- bis dreimal höher als bei Erwachsenen liegt. Damit dieser Bedarf gedeckt wird, muss der Fettanteil der Nahrung 35 bis 50 Prozent betragen, der Kohlenhydratanteil nur etwa 45 Prozent. Auch der Eiweißbedarf ist prozentual gesehen höher als bei Erwachsenen und liegt bis zum Alter von zwei Monaten täglich bei 2,0 bis 2,7 Gramm pro Kilogramm Körpergewicht, danach bei 1,1 bis 1,5 Gramm (Erwachsene: 0,8 g). Der Flüssigkeitsbedarf ist ebenfalls größer, weil die Nieren noch nicht voll ausgereift sind und mehr Flüssigkeit über Atmung und Haut verloren geht.

Aus der EP 2730170 B1 (DMK) sind beispielsweise allergenfreie Nahrungsmittel bekannt, die auch für die Säuglingsernährung eingesetzt werden können und erhältlich sind, indem man Magermilch mikrofiltriert, die resultierende Edelmolke ultrafiltriert, aufkonzentriert, hydrolysiert, pasteurisiert und sprühtrocknet.

Das Dokument US 2009/142459 A1 offenbart ein Verfahren zur Herstellung eines demineralisierten Molkepulvers, welches die folgenden Schritte umfasst:
(a) Aufkonzentrieren der Molke;
(b) Demineralisierung mit Hilfe eines Kationenaustauschers;
(c) Elektroldialyse;
(d) lonenaustauscherbehandlung ("Polisher")
(e) Sprühtrocknung.

Das Dokument CN 102 898 516 A offenbart die säulenchromatographische Trennung von Lactoferrin aus Molke mit Hilfe von Expanded-Bed-Absorption-Chromatographie.

Das Dokument US 6 033 700 A offenbart ein Verfahren zur Entmineralisierung von Milchprodukten und -derivaten unter Ausschluss von Käsereisüßmolke, dadurch gekennzeichnet, dass man ein von Milch stammendes flüssiges Ausgangsmaterial einer Elektrodeionisation in einem Gerät unterzieht, das Verdünnungskammern und Konzentrationskammern aufweist, die Verdünnungskammern Kugeln aus Harzen enthalten, die aus einer Mischung von kationischem Harz und schwach anionischem Harz bestehen, und die Konzentrationskammern
i) entweder kein Harz enthalten
ii) oder Kugeln aus Harzen enthalten, die aus einer Mischung von kationischem Harz und schwach anionischem Harz bestehen
iii) oder Kugeln aus stark kationischem Harz enthalten und
dass man den pH-Wert der Konzentrationskammern auf einen Wert unter 5 einstellt.

Das Dokument EP 2 730 170 B1 offenbart ein Verfahren zur Herstellung von allergenfreie Nahrungsmittelzubereitungen bei dem man
(a) Rohmilch in an sich bekannter Weise erhitzt, von Feststoffen befreit und den Rahm abtrennt,
(b) die so erhaltene Magermilch einer Mikrofiltration unterwirft,
(c) die als erstes Permeat resultierende Edelmolke einer Ultrafiltration unterwirft,
(d) das resultierende zweite Retentat auf eine Trockenmasse von 30 bis 50 Gew.- % aufkonzentriert,
(e) das resultierende Molkenproteinkonzentrat mindestens einer Hydrolyse in Gegenwart mindestens eines proteolytischen Enzyms unterwirft,
(f) das resultierende Hydrolysat einer Waermebehandlung unterwirft und schließlich
(g) das Endprodukt von Wasser befreit.

In den ersten Lebensmonaten funktioniert die Verdauung nur eingeschränkt; Neugeborene besitzen noch keine Darmflora und die Darmschleimhaut ist noch nicht ausgereift; Milchprodukte mit hohem Lactoferringehalt können daher dem Säugling erheblich schaden, da sie antibakteriell wirken und die sich allmählich entwickelnde Darmflora beeinträchtigen. Auch einige für die Nahrungsverarbeitung notwendige Enzyme werden vom Körper erst später gebildet. Aus diesen Gründen sollen Babys in der ersten Lebensphase nur mit Muttermilch oder Säuglingsanfangsnahrung (Anfangs-/Säuglingsmilch) ernährt werden. Folgenahrung (Folgemilch) und Beikost soll nicht in den ersten sechs Lebensmonaten verwendet werden. Frühestens ab dem fünften, spätestens ab dem siebten Monat deckt auch Muttermilch allein nicht mehr den kompletten Nährstoffbedarf des Säuglings.

Babynahrung darf nach den gesetzlichen Vorgaben weder Bakterien noch Schadstoffe enthalten. Sie unterliegt der Diätverordnung und muss daher definierte Höchstmengen an Fett und Kohlenhydraten und bestimmte Mindestmengen an Mineralstoffen sowie Vitaminen enthalten. Dies führt dazu, dass Molke, die wegen ihres hohen Proteingehaltes ein wertvoller Rohstoff für die Säuglingsernährung darstellen könnte, nur eingeschränkt Verwendung findet, da sie unerwünschte Proteinabbauprodukte aus der Dicklegung enthält und in der Regel zu viele Milchmineralien aufweist, als dass auf diese Weise die diätischen Vorschriften eingehalten werden könnten. Ein weiterer Nachteil besteht darin, dass die Aminosäuresequenz der Molkeproteine zu wenige essentielle Aminosäuren beinhaltet.

Die Aufgabe der vorliegenden Erfindung hat daher darin bestanden, Molke, speziell Molkepulver in einer neuen Qualität zur Verfügung zu stellen, welches einen erhöhten Anteil an essentiellen Aminosäuren und gleichzeitig einen stark verminderten Mineralienanteil, insbesondere einen deutlich reduzierten Natriumgehalt aufweist. Gleichzeitig sollten die Produkte frei von unerwünschten Produkten wie GMP und Nebenprodukten aus der Dicklegung sein und Lactoferrin allenfalls noch in solchen Mengen aufweisen, dass diese für die Darmflora eines Neugeborenen nicht schädlich sind.

### BESCHREIBUNG DER ERFINDUNG

Gegenstand der Erfindung ist ein Verfahren zur Herstellung eines demineralisierten Molkepulvers, umfassend die folgenden Schritte:
(a) Separieren von Rohmilch in Magermilch und Rahm;
(b) Mikro- oder Mikrodiafiltrieren der Magermilch unter Erhalt eines molkenproteinreichen Permeats P1 und eines Casein und Glykomakropeptid enthaltenden Retentats R1, wobei die Mikro- oder Mikrodiafiltration mit einer Membran durchführt wird, die eine Porenweite im Bereich von 0,1 bis 1 µm aufweist;
(c) Abtrennen des Lactoferrins aus dem Permeat P1 mit Hilfe einer Säulenchromatographie;
(d) Nanofiltration des von Lactoferrin befreiten Permeats P1 unter Erhalt eines milchmineralienreichen Retentats R2 und eines milchmineralienarmen Permeat P2, wobei die Nanofiltration mit einer Membran durchführt wird, die eine Porenweite im Bereich von 150 bis 1.000 nm aufweist;
(e) Dialysieren des von Lactoferrin befreiten Permeat P2, wobei es sich dabei um eine Elektrodialyse handelt;
(f) Behandlung des im Schritt (e) erhaltenen Diluat mit einem Kationenaustauscher;
(g) Trocknen des Diluats unter Erhalt eines pulverförmigen Produktes.

Die verschiedenen Verfahrensschritte werden nachfolgend näher erläutert.

### SEPARATION

Im erfindungsgemäßen Verfahren ist es von Vorteil, die Separation (Schritt a) kalt durchzuführen. Dabei ist es vorteilhaft, wenn die Temperatur des kalten Zustandes der Rohmilch durch Wärmeaustausch mit einem Wärmeträgermedium auf einen für ihre Separation optimalen Wert eingestellt wird. Normalerweise steht die Rohmilch in einem gekühlten Zustand zur Verfügung, dessen Temperatur nicht dem Wert entspricht, bei dem ihre Kaltseparation am wirkungsvollsten und für das Milchfett (Rahm) am schonendsten betrieben werden kann. Deshalb wird sie durch den Wärmeaustausch auf den für ihre Separation optimalen Wert eingestellt. Die dabei anfallende Austauschkälte kann insbesondere durch eine sogenannte Wärmeschaukel anderen Prozessen, die innerhalb eines Molkereibetriebs ablaufen, zur Verfügung gestellt werden. Beispielsweise ist die Temperatur der gekühlten Rohmilch nicht höher als 6 °C, während die für die Kaltseparation optimale Temperatur im Bereich von 8 bis 15 °C und insbesondere 8 bis 12 °C liegt. In diesem Fall erfolgt der Wärmeaustausch durch Anwärmen der Rohmilch, damit die Temperatur ihres kalten Zustandes auf einen in diesem Bereich liegenden Wert angehoben wird. Normalerweise liegt in Molkereibetrieben ein Wärmeüberschuss vor. Deshalb kann als Wärmeträgermedium für das Anwärmen Niedrigtemperaturwasser, das in Prozessen des Molkereibetriebes anfällt, verwendet werden. Dieses Niedrigtemperaturwasser wird dem Wärmeaustauschprozess mit einer Temperatur, die beispielsweise im Bereich von 35 °C liegt, zugeführt und kühlt sich durch den Wärmeaustausch auf eine Temperatur, die beispielsweise im Bereich von 11 bis 15 °C liegt, ab. Dadurch stellt das erfindungsgemäße Verfahren eine wichtige Kältequelle für Prozesse des Molkereibetriebs zur Verfügung.

Die Abtrennung von Feststoffen sowie die Entrahmung des Fettanteils von etwa 4 Gew.-% erfolgen üblicherweise in einem nachgeschalteten Bauteil, vorzugsweise einem Separator. Derartige Bauteile sind aus dem Stand der Technik hinreichend bekannt. In der Milchindustrie sehr verbreitet sind Separatoren der Firma GEA Westfalia Separator GmbH, mit denen die Feststoffabtrennung einzeln oder gemeinsam durchgeführt werden können (http://www.westfalia-separator.com/de/anwendungen/molkereitechnik/milch-molke.html). Bevorzugte Kaltmilchseparatoren werden von diesem Hersteller unter der Bezeichnung "Procool" angeboten. Entsprechende Bauteile sind beispielsweise auch in der DE 10036085 C1 und der DE 10361526 B3 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

### MIKRO- ODER DIAFILTRATION

Das erfindungsgemäße Verfahren enthält einen ersten zwingenden Filtrationsschritt, nämlich eine Mikro- oder Mikrodiafiltration (Schritt b) der Magermilch, mit der diese vom Casein und Glycomakropeptiden (GMP) befreit wird. Die Mikro- oder Mikrodiafiltration wird mit einer Membran durchführt, die eine Porenweite im Bereich von 0,1 bis 1 µm aufweist.

Der wesentliche Unterschied zwischen der Mikro/Dia- und der Nanofiltration liegt in den verschiedenen Porengrößen und in der unterschiedlichen Membranstruktur wie den Werkstoffen und den beteiligten Filtermaterialien. Eine Filtration durch Membranen mit einer Porengröße < 0,1 µm wird in der Regel Nano- oder Ultrafiltration genannt, während die Filtration bei Porengrößen > 0,1 µm, speziell von 01, bis 1 µm, gewöhnlich als Mikro- oder Diafiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmodule, Taschenfilter und Hohlfasermodule, die im Sinne der vorliegenden Erfindung alle grundsätzlich geeignet sind.

### SÄULENCHROMATOGRAPHIE

Die Säulenchromatographie (Schritt c) dient dazu, Lactoferrin abzutrennen, es aufzureinigen und später wieder dem fertigen Endprodukt in einer definierten, jedoch vergleichsweise geringeren Menge wieder zuzusetzen. Für die Abtrennung kommen übliche Absorptionssäulen in Frage, wie sie aus dem Stand der Technik dem Fachmann hinreichend geläufig sind.

Als besonders vorteilhaft hat sich jedoch die so genannte Expanded Bed Adsorption (EBA) erwiesen. Die Prinzipien, nach denen Proteine gemäß dieser Methode gebunden werden, sind grundsätzlich von denen einer klassischen Säulenchromatographie, oder lonenaustauschertechnologie nicht verschieden. Wo die klassische Säulenchromatographie jedoch eine feste Phase in Form einer Packung einsetzt, nutzt die EBA die Partikel in einem fluidisierten Zustand, d.h. in einer Art Wirbelschicht, wobei sich das Volumen idealerweise um den Faktor 2 ausdehnt. Wesentlich ist ferner, dass die Partikel unterschiedliche Größen und Dichten aufweisen, wodurch bei der Expansion des Bettes ein Partikelgrößengradient entsteht. In der Wirbelschicht entstehen dabei zusätzlich lokale Turbulenzen. Dies führt dazu dass insbesondere Bestandteile, die eine bestimmte Größe überschreiten oder die Tendenz aufweisen, zu agglomerieren, die Wirbelschicht durchströmen, was in einer festen Packung nicht möglich wäre.

Bei der EBA werden die Säulen, bei denen es sich vorzugsweise um Feststoff-Adsorptionssäulen handelt, von oben mit dem Adsorbens befüllt. Bei diesen handelt es sich zum einen um ein nicht-durchlässiges Material hoher Dichte und zum anderen um ein zur Proteinbindung befähigtes lonenaustauscherharz. Vorzugsweise weist das nicht-durchlässige Material eine Dichte von mindestens 1,5 g/ml und/oder eine Teilchengröße von höchstens 150 µm und insbesondere 40 bis 120 µm auf. Gängige Beispiele hierfür bilden Glas- oder Metallperlen, speziell Wolfram, wobei diese wie eingangs beschrieben unterschiedliche Durchmesser und Dichten aufweisen sollten, damit in der Wirbelschicht ein entsprechender Gradient entsteht. Dieses Material stellt den Träger in der Wirbelschicht dar.

Der zweite Teil des Adsorbers ist ein lonenaustauscherharz, das zur Bindung von Proteinen befähigt ist. Beispielsweise kommt hierfür ein Sulfonsäure-Anionenaustauscherharz auf Polysaccharidbasis in Betracht, wie es in der EP 1401289 B1 (Beispiel 3) beschrieben wird.

Grundsätzlich können Träger und Ionenaustauscher nacheinander oder gemeinsam in die Säule gefüllt werden. Es ist auch möglich, die Träger mit den Harzen zu beschichten. Nach dem Befüllen bilden die Trägermaterialien eine dichte Schüttung, die großen Aggregaten wenig Raum zum Durchkommen bietet. Sobald das Bett in fluidisierten Zustand versetzt wird, beispielsweise dadurch, dass die Schüttung mit einem Magnetrührer aufgewirbelt wird, und die Sinkgeschwindigkeit der Aufwärtsströmung entspricht, bilden die Träger einen stabilen Konzentrationsgradienten aus. Ziel ist es, einen Flux einzustellen, bei dem die Geschwindigkeit der zu trennenden Stoffe größer ist als die der Trägerteilchen. Um den Unterschied in den Steiggeschwindigkeiten zu erhöhen, werden die Träger auch oftmals mit einem Quarz- oder Metallkern versehen.

Um Verunreinigungen zu entfernen hat es sich als vorteilhaft erwiesen, dass man die EBA-Säule vor und nach der Beladung mit der kalt separierten Magermilch äquilibriert, beispielsweise mit Wasser oder einer Pufferlösung. Weitere vorteilhafte Ausgestaltungsformen dieses Verfahrensschrittes bestehen darin, dass man
- die kalt separierte Magermilch mit einer Fluxrate von 3 bis 50 cm/min aufbringt; und/oder
- das nicht-durchlässige Material hoher Dichte und das zur Proteinbindung befähigten lonenaustauscherharz im Gewichtsverhältnis von 20:80 bis 50:50 einsetzt; und/oder
- das Adsorbens bestehend aus dem nicht-durchlässigen Material hoher Dichte und dem zur Proteinbindung befähigten lonenaustauscherharz relativ zu dem auf die EBA-Säule zu ladenden kalt separierten Magermilch in einem v/v-Verhältnis von 1:100 bis etwa 1:1.000 und vorzugsweise 1:250 bis 1:500 einsetzt.

Nachdem die Aufgabe vollständig ist, wird der fluidisierte Zustand beendet und der Packung Gelegenheit gegeben, sich wieder zu setzen. Dann erfolgt das Spülen der Säule mit Wasser und die eigentliche Desorption des Lactoferrins vorzugsweise in Gegenstromrichtung, d.h. von unten nach oben, wobei als Eluenten vorzugsweise verdünnte Basen eingesetzt werden. Es hat sich im Hinblick auf die Steigerung der Ausbeute als besonders vorteilhaft erwiesen, wenn man für diesen Zweck verdünnte Basen einsetzt. Ein ausgezeichnetes System stellt verdünnte (z.B. 0,1 M) Natronlauge dar, die gegebenenfalls noch einen Puffer enthalten kann.

Somit umfasst das erfindungsgemäße Verfahren als zusätzliches Element den Schritt, gemäß dem man das Lactoferrin von der Säule eluiert, das Eluat von Salzen befreit, trocknet und das reine Lactoferrin anschließend dem demineralisierten Molkepulver wieder in definierten Mengen zusetzt.

### NANOFILTRATION ODER UMKEHROSMOSE

Das erfindungsgemäße Verfahren enthält wie schon oben erwähnt einen zusätzlichen Schritt, bei man das von Lactoferrin befreite Permeat P1 einer Nanofiltration unterwirft (Schritt (d)), das so erhaltene Retentat R2, das die Milchmineralien enthält, einer weiteren Verwertung zuführt und das demineralisierte Permeat P2 anschließend dialysiert. Die Nanofiltration wird mit einer Membran durchgeführt, die eine Porenweite im Bereich von 150 bis 1.000 nm aufweist.

Dieser Schritt dient insbesondere dazu, die Produktmenge, die in die Dialyse geht, zu verringern, um die Dialysezelle kleiner halten zu können. Es ist daher alternativ ebenfalls möglich, dass man das von Lactoferrin befreite Permeat P1 vor der Dialyse durch Verdampfen aufkonzentriert.

### DIALYSE

Bei der Dialyse (Schritt e) handelt es sich um eine Elektrodialyse. Hierbei handelt es sich um einen elektrochemisch getriebenen Membranprozess, in dem lonenaustauschermembranen in Kombination mit einer elektrischen Potentialdifferenz benutzt werden, um ionische Spezies von ungeladenen Lösungsmitteln oder Verunreinigungen abzutrennen.

Dazu wird in einem Elektrodialyse-Separator der Raum zwischen zwei Elektroden durch einen Stapel aus einander abwechselnden Anionen- und Kationenaustauschermembranen getrennt. Jedes Paar lonenaustauschermembranen bildet eine separate "Zelle". In technischen Systemen bestehen diese Stapel aus mehr als zweihundert Membranpaaren. Wird eine elektrische Gleichspannung an die Elektroden angelegt, so wandern die Anionen zur Anode. Die Anionen können einfach die positiv geladenen Anionenaustauschermembranen passieren, aber sie werden jeweils an der nächstgelegenen negativ geladenen Kationenaustauschermembran gestoppt. Weil dasselbe (natürlich mit umgekehrten Vorzeichen) auch mit den Kationen geschieht, besteht der Nettoeffekt der Elektrodialyse in einer Anreicherung der Salze in den Zellen mit ungerader Nummer (Anionentauschermembran/Kationenaustauschermembran), während die Zellen mit gerader Nummer (Kationenaustauschermembran/Anionentauschermembran) an Salz verarmen. Die Lösungen mit erhöhter Salzkonzentration werden zum *Konzentrat* vereint, während die salzarmen Lösungen das *Diluat* bilden.

Das gewonnene Diluat wird abschließend mit einem Kationenaustauscher ("Polisher") behandelt (Schritt (f)) und insbesondere mit der Elektrodialyse eingeschleppte Natriumionen wieder abtrennt.

### PASTEURISIERUNG

Es empfiehlt sich das Dialyseprodukt vor der Trocknung einer Pasteurisierung zu unterwerfen, da sich das Produkt immer noch auf der "rohen" Seite befindet und bisher noch nicht erhitzt wurde. Diese findet vorzugsweise in Wärmeaustauschern statt, wobei sich speziell Plattenwärmeaustauscher als besonders geeignet erwiesen haben. An den Wärmeaustauschern liegt ein Temperaturgradient an, der jedoch so gewählt ist, dass das Produkt für eine Verweilzeit von mindestens 20 und höchstens 60 Sekunden, vorzugsweise 30 Sekunden auf eine Temperatur von 70 bis 80 °C und insbesondere 72 bis 74 °C erhitzt wird.

### Direct Steam Injection

In einer ersten alternativen Ausführungsform kann das Dialyseprodukt auch durch Direct Steam Injection (DSI) pasteurisiert werden. Dies hat den Vorteil, dass das langsame Durchlaufen eines Temperaturbereiches, in dem mesophile und thermophile Sporen optimale Wachstumsbedingungen vorfinden, durch eine blitzartige Erwärmung signifikant verkürzt wird. Dies wird durch die direkte Einspritzung von heißem oder sogar überhitztem Wasserdampf erreicht, der eine Temperatur von 100 bis 250 °C aufweisen kann. Üblicherweise erfolgt dies mit Hilfe von Düsen, die entweder direkt in das Produkt eintauchen oder in einer Ableitung des Wärmeaustauschers eingebaut sind.

Das Prinzip von DSI besteht darin, dass ein unter Druck stehender hocherhitzter Wasserdampfstrahl in eine Düsenkammer geleitet wird und sich dann durch ein perforiertes Rohr ("Radial Steam Jet Diffuser") in das zu erhitzende flüssige Produkt entspannt. Der Hochdruckstrom erzeugt ein sich mit hoher Geschwindigkeit ausbreitendes radiales Wärmeaustauschfeld, wodurch eine gleichmäßige Erhitzung des Produktes in sehr kurzen Zeiten erreicht wird.

Das Ziel besteht darin, das Milchprodukt in sehr kurzer Zeit, vorzugsweise 1 bis 5 Sekunden und insbesondere 1 bis 2 Sekunden auf eine exakte Temperatur einzustellen. Dazu ist es erforderlich, eine möglichst präzise Menge an Dampf mit hoher Geschwindigkeit in das Produkt einzuleiten. Erfolgt die Kontrolle der Dampfmenge über ein Druckminderventil, fällt die Geschwindigkeit des Dampfes in der Regel unter die Schallgeschwindigkeit, was dazu führt, dass sich das Produkt nicht schnell genug erhitzt. Um dies zu verhindern wird der Dampf im Sinne des erfindungsgemäßen Verfahrens vorzugsweise unter so-genannten "choke-flow" Bedingungen eingespeist, weil dies erlaubt, Dampf auch mit Ultraschallgeschwindigkeit direkt in das zu erhitzende Produkt einzuleiten. Hierunter versteht man das Phänomen, die Dampfgeschwindigkeit zu steigern, indem man eine Druckdifferenz mit Hilfe einer speziellen Düse erzeugt. Entsprechende Bauteile sind beispielsweise von der Firma ProSonics im Handel erhältlich.

Die DSI erfordert keine Vorerwärmung des Einsatzstoffes, d.h. das Dialyseprodukt kann unmittelbar verwendet werden. Allerdings ist die Temperaturführung umso präziser, je geringer die Temperaturunterschiede sind.

### Infusion

In einer zweiten alternativen Ausführungsform kann das Dialyseprodukt auch durch (Dampf-)Infusion pasteurisiert werden. Dieses Verfahren ist seit den 1960er Jahren bekannt. Grundsätzlich kann die Erwärmung in zwei Schritten durchgeführt werden, wobei das zu erhitzende Gut in eine mit Heißdampf gefüllte Druckkammer eingedüst wird und die Erwärmung bzw. Pasteurisierung auf dem Fallweg der Tröpfchen erfolgt. Seit dem Jahr 2000 hat indes der so genannte PDX-Prozess an Bedeutung gewonnen. Dabei wird das zu erwärmende Gut vaporisiert und in einem Strom überhitzten Wasserdampfs schlagartig erwärmt. Der sich mit Überschallgeschwindigkeit vorwärtsbewegende Dampfstrom verteilt die Produkttröpfchen homogen, so dass ein Mehrphasenstrom entsteht, wobei die Erhitzung schonend nur an den Grenzflächen der Tröpfchen stattfindet. Auf diese Weise gleichzeitig wird eine Kondensation der Tröpfchen bewirkt. Der Wasserdampf kann dabei eine Temperatur von 100 bis 250 °C und insbesondere 120 bis 150 °C aufweisen, die Infusion benötigt eine Zeit von typisch 1 bis 5 und insbesondere 2 bis 3 Sekunden.

In einer weiteren bevorzugten Ausgestaltung erfolgt die Infusionserwärmung dergestalt, dass Produkt und Dampf abwechselnd über konzentrische Ringdüsen in einen Reaktor versprüht werden, so dass von innen nach außen ein Dampfdruckgradient entsteht. Dadurch werden die Tröpfchen von der Wandung ferngehalten und können nicht verbrennen.

### TROCKNUNG

Im letzten Verfahrensschritt wird das vorzugsweise pasteurisierte mit einem Kationenaustauscher behandelte Dialyseprodukt getrocknet (Schritt g). Vorzugsweise kommt dabei die Sprühtrocknung zum Zuge, wobei die Temperatur im Einlass typischerweise 180 bis 260 °C und am Ausgang 80 bis 105 °C beträgt. Die pasteurisierten Produkte bedürfen daher keiner Kühlung bevor sie in den Sprühturm gelangen. Temperaturen von 60 bis 70 °C sind dabei sogar bevorzugt, da auf diese Weise die Gefahr verringert wird, dass die Proteine denaturieren. Alternativ können die Produkte auch durch Gefriertrocknung entwässert werden.

Den Produkten können vor, vorzugsweise aber nach dem Versprühen auch weitere Zusatzstoffe zugesetzt werden, wie beispielsweise Lactoferrin, Lecithine, Vitamine oder Lebensmittelemulgatoren [EP 1314367 A1**,** NESTLE] und dergleichen.

### BEISPIEL 1

330 kg vorgekühlte Rohmilch wurden in einem Separator bei 8 °C von Feststoffen befreit und entrahmt. Dabei fielen 300 kg Magermilch und 30 kg Rahm an, der anschließend durch Ultrahochtemperaturerhitzung pasteurisiert und dann weiterverwertet wurde.

Die Magermilch wurde auf 55 °C erwärmt und dann einer Mikrofiltrationseinheit zugeführt, in der sie zusammen mit 100 kg Diawasser über eine Membran mit einer mittleren Porenweite von 0,1 µm gegeben wurde. Es wurden 66 kg Retentat erhalten, welches zu 90 % aus Casein bestand und auch die gesamte Menge an Glycomakropeptiden (GMP) und Keimen enthielt. Da diese Fraktion temperaturstabil ist, konnte sie einer Pasteurisierung unter Standardbedingungen (72 °C, 15 Sekunden) unterworfen werden, wobei ein Caseinproteinkonzentrat erhalten wurde.

Es wurden 333 kg Permeat gewonnen, das eine Trockenmasse von 5,5 Gew.-% und einen Lactoferringehalt von 100 mg/kg (entsprechend 300 g) aufwies. Das Permeat wurde auf eine EBA-Säule gegeben (η = 0,8) wobei das Lactoferrin sowie ein Teil der enthaltenen Salze adsorbiert wurden. Das absorbierte Lactoferrin wurde mit 0,1 normalen NaOH-Pufferlösung eluiert, durch Ultrafiltration entsalzt und das angefallene Retentat getrocknet. Es wurden 260 g reines Lactoferrin gewonnen, welches dem Molkepulver abschließend in einer definierten Menge wieder zugegeben wurde.

Die von Lactoferrin befreite Molke (333 kg) wies einen Anteil an essentiellen Aminosäuren auf, der im Vergleich zum Ausgangswert 22 % höher lag und wurde nun einer Nanofiltrationseinheit zugeführt, die eine Porenweite von 800 nm aufwies; der Volumenkonzentrierungsfaktor (VCF) betrug 4. Es wurden 249 kg Retentat erhalten, das einen großen Teil der Milchmineralien enthielt, sowie 83 kg Permeat, das einer Elektrodialyse unterworfen wurde. Unter Einsatz von etwa 115 kg Natriumchloridlösung wurden 76 kg Dialyseprodukt erhalten, die in einem Kationenaustauscher von eingeschleppten Natriumionen befreit wurden.

Die resultierende Produktmenge entsprach einer "humanisierten Kuhmilch" und wurde dann zunächst pasteurisiert und dann einer Sprühtrocknung bei 120 °C unterworfen. Es wurden 16 kg Molkepulver erhalten, dessen Mineraliengehalt 90 % niedriger als der von Standardmolkeproduikten lag.

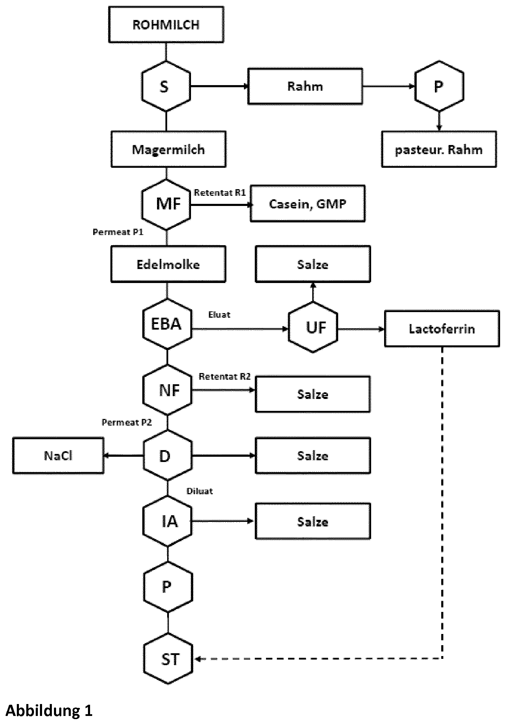

Das Verfahren wird in der nachfolgenden **Abbildung 1** durch ein Fließschema verdeutlicht. Dabei bedeutet: S = Separation, P = Pasteurisierung; MF = Mikrofiltration; EBA = Expanded Bed Absorption; UF = Ultrafiltration; NF = Nanofiltration; D = Elektrodialyse; IA = Ionenaustauscher; ST = Sprühtrocknung

## Patentansprüche

1. Verfahren zur Herstellung eines demineralisierten Molkepulvers, umfassend die folgenden Schritte:
(a) Separieren von Rohmilch in Magermilch und Rahm;
(b) Mikro- oder Mikrodiafiltrieren der Magermilch unter Erhalt eines molkenproteinreichen Permeats P1 und eines Casein und Glykomakropeptid enthaltenden Retentats R1, wobei die Mikro- oder Mikrodiafiltration mit einer Membran durchgeführt wird, die eine Porenweite im Bereich von 0,1 bis 1 µm aufweist;
(c) Abtrennen des Lactoferrins aus dem Permeat P1 mit Hilfe einer Säulenchromatographie;
(d) Nanofiltration des von Lactoferrin befreiten Permeats P1 unter Erhalt eines milchmineralienreichen Retentats R2 und eines milchmineralienarmen Permeat P2, wobei die Nanofiltration mit einer Membran durchführt wird, die eine Porenweite im Bereich von 150 bis 1.000 nm aufweist;
(e) Dialysieren des von Lactoferrin befreiten Permeat P2, wobei es sich dabei um eine Elektrodialyse handelt;
(f) Behandlung des im Schritt (e) erhaltenen Diluat mit einem Kationenaustauscher;
(g) Trocknen des Diluats unter Erhalt eines pulverförmigen Produktes.

2. Verfahren nach Anspruch 1, **dadurch gekennzeichnet, dass** man die Rohmilch kalt separiert.

3. Verfahren nach Anspruch 2, **dadurch gekennzeichnet, dass** man die Rohmilch bei einer Temperatur im Bereich von 8 bis 15 °C separiert.

4. Verfahren nach mindestens einem der Ansprüche 1 bis 3, **dadurch gekennzeichnet, dass** man das Lactoferrin von der Säule eluiert, das Eluat von Salzen befreit, trocknet und das reine Lactoferrin anschließend dem demineralisierten Molkepulver wieder in definierten Mengen zusetzt.

5. Verfahren nach mindestens einem der Ansprüche 1 bis 4, **dadurch gekennzeichnet, dass** man das von Lactoferrin befreite Permeat P1 vor der Dialyse durch Verdampfen aufkonzentriert.

6. Verfahren nach mindestens einem der Ansprüche 1 bis 5, **dadurch gekennzeichnet, dass** man das Diluat einer Pasteurisierung unterwirft und dann trocknet.

7. Verfahren nach Anspruch 6, wobei die Pasteurisierung durch Direct Steam Injection (DSI) erfolgt.

8. Verfahren nach Anspruch 6, wobei die Pasteurisierung durch (Dampf-) Infusion erfolgt.

9. Verfahren nach mindestens einem der Ansprüche 1 bis 8, **dadurch gekennzeichnet, dass** man das Diluat einer Sprüh- oder Gefriertrocknung unterwirft.

## Claims

1. Process for the production of a demineralised whey powder, comprising the following steps:
(a) separating raw milk into skimmed milk and cream;
(b) microfiltrating or microdiafiltrating the skimmed milk, obtaining a whey protein-rich permeate P1 and a retentate R1 containing casein and Glycomacropeptide, wherein the microfiltration or the microdiafiltration is performed with a membrane having a pore size in the range from 0.1 to 1 µm;
(c) separating the lactoferrin from the permeate P1 by means of column chromatography;
(d) nanofiltrating the permeate P1 from which lactoferrin had been removed, obtaining a milk minerals-rich retentate R2 and a milk minerals-poor permeate P2, wherein the nanofiltration is performed with a membrane having a pore size in the range from 150 to about 1,000 nm;
(e) dialysing the permeate P2 from which lactoferrin had been removed, wherein the permeate P2 is subjected to electrodialysis;
(f) treating the diluate from step (e) with a cation exchanger;
(g) drying the diluate, obtaining a product in powder form.

2. Process according to claim 1, wherein the raw milk is cold-separated.

3. Process according to claim 2, wherein the raw milk is separated at a temperature in the range from 8 to 15 °C.

4. The process according to at least one of claims 1 to 3, wherein the lactoferrin of the column is eluated, salts are removed from the eluate, which is then dried, and the pure lactoferrin is subsequently added to the demineralised whey powder in defined amounts again.

5. The process according to at least one of claims 1 to 4, wherein the permeate P1, from which lactoferrin had been removed, is concentrated before dialysis by evaporation.

6. The process according to at least one of claims 1 to 5, wherein the diluate is subjected to pasteurization and then dried.

7. Process according to claim 6, wherein the pasteurization is carried out by Direct Steam Injection (DSI).

8. Process according to claim 6, wherein the pasteurization is carried out by (steam) infusion.

9. The process according to at least one of claims 1 to 8, wherein the diluate is subjected to spray drying or freeze drying.

## Revendications

1. Procédé pour la production d'une poudre de lactosérum déminéralisée, comprenant les étapes suivantes :
(a) fractionnement de lait cru en lait écrémé et en crème ;
(b) microfiltration ou microdiafiltration du lait écrémé avec obtention d'un perméat P1 riche en protéines de lactosérum et d'un rétentat R1 contenant de la caséine et du glycomacropeptide, la microfiltration ou microdiafiltration étant effectuée à l'aide d'une membrane qui présente une largeur de pore dans la plage de 0,1 à 1 µm ;
(c) séparation de la lactoferrine d'avec le perméat P1 à l'aide d'une chromatographie sur colonne ;
(d) nanofiltration du perméat P1 exempt de lactoferrine, avec obtention d'un rétentat R2 riche en minéraux du lait et d'un perméat P2 pauvre en minéraux du lait, la nanofiltration étant effectuée à l'aide d'une membrane qui présente une largeur de pore dans la plage de 150 à 1 000 nm ;
(e) dialyse du perméat P2 exempt de lactoferrine, cette dialyse étant une électrodialyse ;
(f) traitement par un échangeur de cations du diluat obtenu dans l'étape (e) ;
(g) séchage du diluat avec obtention d'un produit pulvérulent.

2. Procédé selon la revendication 1, **caractérisé en ce qu'**on fractionne le lait cru à froid.

3. Procédé selon la revendication 2, **caractérisé en ce qu'**on fractionne le lait cru à une température dans la plage de 8 à 15 °C.

4. Procédé selon au moins l'une quelconque des revendications 1 à 3, **caractérisé en ce qu'**on élue la lactoferrine de la colonne, libère de sels l'éluat, sèche et ensuite rajoute en quantités définies la lactoferrine pure à la poudre de lactosérum déminéralisée.

5. Procédé selon au moins l'une quelconque des revendications 1 à 4, **caractérisé en ce qu'**avant la dialyse on concentre par évaporation le perméat P1 exempt de lactoferrine.

6. Procédé selon au moins l'une quelconque des revendications 1 à 5, **caractérisé en ce qu'**on soumet le diluat à une pasteurisation et ensuite on le sèche.

7. Procédé selon la revendication 6, dans lequel la pasteurisation s'effectue par Direct Steam Injection (DSI).

8. Procédé selon la revendication 6, dans lequel la pasteurisation s'effectue par infusion (de vapeur).

9. Procédé selon au moins l'une quelconque des revendications 1 à 8, **caractérisé en ce qu'**on soumet le diluat à une lyophilisation ou un séchage par atomisation.
